# EUROPEAN PATENT APPLICATION

(11) **EP 4 629 688 A1**
(43) Date of publication of application: **08.10.2025**
(21) Application number: 25168480.9
(22) Date of filing: 04.04.2025
(51) Int. Cl.: H04W 24/04, H04W 24/02

(54) **IMPROVEMENT IN UE COMMUNICATION EXPERIENCE THROUGH RNA OPTIMIZATION**

(30) Priority: 04.04.2024 IN 202441028017; 02.04.2025 US 202519097934
(71) Applicant: Mavenir Systems, Inc., Richardson, TX 75081 (US)
(72) Inventor: GUPTA, Anuj, 560016 Mahadevapura, Bangalore (IN); AGARWAL, Yogendra, 560016 Mahadevapura, Bangalore (IN); PRASAD, Krishna, 560077 BiliShivale, Bangalore (IN); SIVARAJ, Rajarajan, Plano, 75074 (US)
(74) Representative: Studio Torta S.p.A.

(57) **Abstract**

A method of optimizing Radio Access Network-based Notification Area (RNA) in the case a user equipment (UE) transitions to radio resource control inactive (RRC_INACTIVE) state includes: detecting, by a radio intelligent controller (RIC) using artificial intelligence (AI) and/or machine learning (ML) technique (e.g., State Vector Machine or Isolation Forest), an anomaly cell based on at least one of the following factors: key performance indicators (KPIs), performance measurements (PMs), configuration parameters (CMs), fault management (FM) data, and trace data; determining, by the RIC, based on the at least one of the factors, a cause for the detected anomaly cell; and recommending, by the RIC to a gNodeB associated with the RNA having the anomaly cell, at least one of the following actions: a) exclude the anomaly cell from the RNA, and b) disable new radio resource control (RRC) connections from the UE.

## Description

### BACKGROUND OF THE DISCLOSURE

### 1. Field of the Disclosure

The present disclosure relates to 5G Radio Access Network (RAN) wireless communication technology, and relates more particularly to a method to optimize RAN-based Notification Area (RNA).

### 2. Description of the Related Art

3GPP 5G New Radio (NR) specification (see, e.g., technical specification TS 38.331 version 16.10.0 Release 16) has introduced an additional radio resource control (RRC) state called "*RRC_INACTIVE*" state, under which state the S1 interface connections between gNodeB and Access and Mobility Management Function (AMF) are maintained but the RRC connections are released.

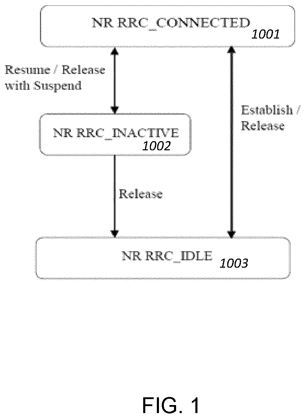

FIG. 1 shows the user equipment (UE) state machine and state transitions among various NR states including *"*RRC_CONNECTED", "RRC_INACTIVE" and "RRC_IDLE", as per TS 38.331 version 16.10.0 Release 16.

When the UE is about to go into RRC_INACTIVE state, RAN-based Notification Area (RNA) is configured by the gNodeB (or gNB), which RNA consists of a cell or a list of cells of a 5G Network. RNA is used to ensure uninterrupted connectivity of a UE which is experiencing mobility. A gNodeB is responsible for UE reachability by resolving UE locations through RNA, i.e., a UE should always be reachable in RNA so paging will be sent to all the cells in the RNA if the UE has mobile terminated call. A gNodeB is not aware of the exact cell details when the UE moves within the RNA, and an RNA Update will be triggered when the UE moves out of the RNA.

Issue arises when a gNodeB assigns an anomaly cell (non-performing cell) as part of the RNA to a UE or a list of UEs. Anomaly cells are non-performing cells which have good corroborative key performance indicators (KPIs) but which also experience abnormal issues (e.g., RACH issues, RRC Connection Establishment Failures, PAGING issues, bad DL/UL throughput, etc.). If UEs in RRC_INACTIVE mode move to an anomaly cell (non-performing cell), the UEs will not report any location update to the network. In addition, if the cell is experiencing PAGING issues, then a possibility exists of UE(s) being identified as *"Not Reachable",* in which case a terminating request will not be served, resulting in a poor communication experience for the UE(s).

Therefore, a need exists to provide a method of optimizing RNA to improve UE communication experience in the case UE(s) transition to RRC_INACTIVE state.

### SUMMARY OF THE DISCLOSURE

The present disclosure provides a method of optimizing RNA to improve UE communication experience in the case UE(s) transition to RRC_INACTIVE state.

According to an example embodiment, a method of optimizing RNA in the case UE(s) transition to RRC_INACTIVE state utilizes a radio intelligent controller (RIC) using artificial intelligence (AI) and/or machine learning (ML) techniques to detect an anomaly cell(s) based on at least one of the following factors: KPIs, performance measurements (PMs), configuration parameters (CMs), fault management (FM) data (e.g., relating to network alarms), and/or trace data (state and contextual information). RAN KPI is a function of at least one of the PMs, CMs, FMs and/or trace data.

According to an example embodiment of the method, the RIC i) analyzes the relevant data to determine the cause for the detected anomaly cell(s), and ii) recommends to the relevant gNodeB associated with the RNA having the anomaly cell(s) at least one of the following actions: a) exclude the anomaly cell(s) from the RNA, and/or b) disable new RRC connections from the UE(s), e.g., including the *RRCResumeRequest* procedure for the anomaly cell(s). Other types of recommended actions can be implemented based on the different types of anomalies.

According to an example embodiment of the method, the RIC will withdraw the recommended action(s) once the anomaly cell(s) start operating normally, e.g., the withdrawal of the recommended action can be based on at least one of the following: i) the RIC successfully determines (e.g., using AI/ML) the cause of the anomaly and takes corrective action(s) to address the anomaly; ii) the RIC receives cell shutdown and/or restart trigger notification; and/or iii) automatic withdrawal of the recommended action after a specified period of time.

According to an example embodiment of the method, problems related to paging issues will be avoided because anomaly cells are not considered in an RNA.

According to an example embodiment of the method, if a UE moves out of a given RNA and into an anomaly cell, the UE will trigger an RNA update procedure, and the present example method will prevent the RRC procedures to be completed.

### BRIEF DESCRIPTION OF THE DRAWINGS

FIG. 1 shows the user equipment (UE) state machine and state transitions among various NR states
FIG. 2 is a flowchart of an example embodiment of optimizing RNA to improve UE communication experience in the case UE(s) transition to RRC_INACTIVE state.

### DETAILED DESCRIPTION

According to an example embodiment, a method of optimizing RNA in the case UE(s) transition to RRC_INACTIVE state utilizes a radio intelligent controller (RIC) using artificial intelligence (AI) and/or machine learning (ML) techniques to detect an anomaly cell(s) based on at least one of the following factors: KPIs, performance measurements (PMs), configuration parameters (CMs), fault management (FM) data (e.g., relating to network alarms), and/or trace data (state and contextual information). RAN KPI is a function of at least one of the PMs, CMs, FMs and/or trace data.

According to an example embodiment of the method, the RIC i) analyzes the relevant data to determine the cause for the detected anomaly cell(s), and ii) recommends to the relevant gNodeB associated with the RNA having the anomaly cell(s) at least one of the following actions: a) exclude the anomaly cell(s) from the RNA, and/or b) disable new RRC connections from the UE(s), e.g., including the *RRCResumeRequest* procedure for the anomaly cell(s). Other types of recommended actions can be implemented based on the different types of anomalies.

According to an example embodiment of the method, the RIC will withdraw the recommended action(s) once the anomaly cell(s) start operating normally, e.g., the withdrawal of the recommended action can be based on at least one of the following: i) the RIC successfully determines (e.g., using AI/ML) the cause of the anomaly and takes corrective action(s) to address the anomaly; ii) the RIC receives cell shutdown and/or restart trigger notification; and/or iii) automatic withdrawal of the recommended action after a specified period of time.

Several advantages are provided by the example embodiment of the method. First, problems related to paging issues will be avoided because anomaly cells are not considered in an RNA. In addition, if a UE moves out of a given RNA and into an anomaly cell, the UE will trigger an RNA update procedure, and the present example method will prevent the RRC procedures to be completed.

According to an example embodiment of the method, the RIC can be used to implement an AI/ML platform. The AI/ML platform can obtain the various input data (e.g., KPIs, PMs, CMs, trace data, and/or FM data) from an Operations, Administration and Maintenance (OAM) Management Service (MnS) producer sub-function of the RAN network functions (NFs) during "events", e.g.: i) change in the value of a configuration parameter; or ii) the occurrence of a RAN event, such as the value of a measurement counter becoming lower than a pre-defined threshold, or a link failure, which can trigger corresponding RAN data to be generated. The mechanism to collect the relevant data follows a job control subscription process that specifies what data must be collected and under what conditions or for which events.

The RIC data lakes (data pools) correlate the data pertaining to different data types in time, for each desired periodic interval, and store the correlated information in a time series database. Each record (e.g., containing the correlated PM, CM, trace and/or FM information) is sent to the AI/ML engine, which trains a model to learn the KPI as a function of the time-correlated information pertaining to the cell, based on a selected algorithm. According to an example embodiment, Isolation Forest algorithm or Support Vector Machine algorithm can be utilized for training a model, which algorithms will be explained below.

Support vector machines (SVMs) are supervised max-margin models with associated learning algorithms that analyze data for, e.g., classification and/or regression analysis. SVM constructs a hyperplane or set of hyperplanes in a high or infinite-dimensional space, which can be used for classification, regression, or other tasks like outliers detection. SVMs categorize different classes of the input features based on n-dimensional hyperplanes comprised of time series/time correlated PM/CM/FM/Trace data for accurate prediction of the KPI or the class of the KPI.

Forest-based algorithm (e.g., Isolation Forest) creates a model by applying a bagging technique in which each decision tree is created in parallel using a randomly generated portion of the original (training) data. Each tree generates its own prediction and votes on an outcome. The forest-based model considers the votes from all the decision trees to predict or classify the outcome of an unknown sample. Individual trees may have issues with overfitting a model, so combining multiple trees in a forest for prediction addresses the overfitting problem associated with a single tree. According to an example embodiment, Isolation Forest model i) uses decision trees with multiple levels of depth, and ii) maps the input features to the decision trees for predicting the output of the KPI or class of the KPI based on these features.

Both SVMs and forest-based mechanisms (e.g., Isolation Forest) help to achieve better explainability of the KPI as a function of different features for predicting the KPI. AI/ML engine trains a model that learns the KPI as a function of the different time-correlated input features. While the KPI is modeled as a function of the PM, CM, FM, and/or trace data, optimization recommendations are generated by the AI/ML engine using suitable algorithms (e.g., reinforcement learning) to determine the appropriate configuration parameters for improving the KPIs.

In summary, AI/ML technique(s) (e.g., SVM or Isolation Forest) can be used to train a model to detect an anomaly cell based on at least one of KPIs, PMs, CMs, FM data, and/or trace data.

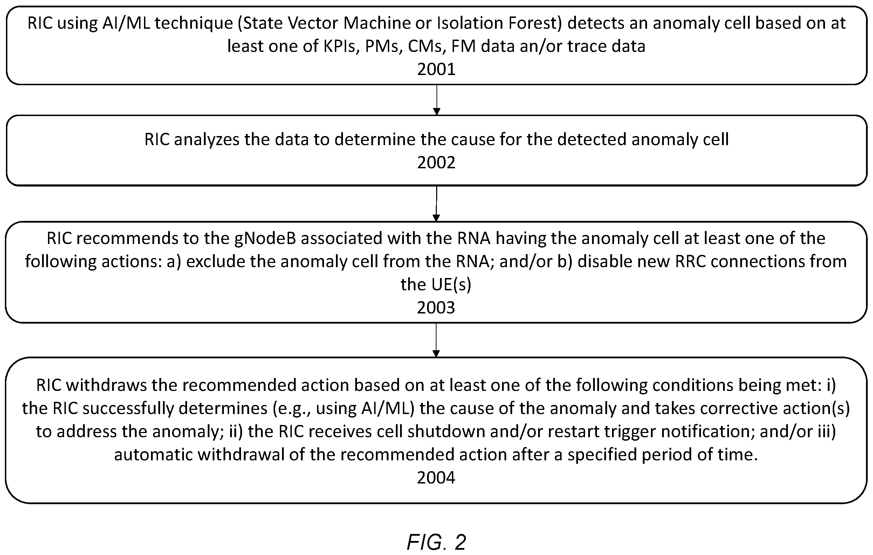

FIG. 2 shows a flowchart of an example method of optimizing RNA in the case UE(s) transition to RRC_INACTIVE state. As shown in 2001, a radio intelligent controller (RIC) using artificial intelligence (AI) and/or machine learning (ML) techniques (e.g., SVM or Isolation Forest) detects anomaly cell(s) based on at least one of the following factors: KPIs, performance measurements (PMs), configuration parameters (CMs), fault management (FM) data (e.g., relating to network alarms), and/or trace data (state and contextual information). RAN KPI is a function of at least one of the PMs, CMs, FMs and/or trace data. As shown in 2002, the RIC analyzes the relevant data to determine the cause for the detected anomaly cell(s). As shown in 2003, the RIC recommends to the relevant gNodeB associated with the RNA having the anomaly cell(s) at least one of the following actions: a) exclude the anomaly cell(s) from the RNA, and/or b) disable new RRC connections from the UE(s), e.g., including the *RRCResumeRequest* procedure for the anomaly cell(s). Other types of recommended actions can be implemented based on the different types of anomalies. As shown in 2004, the RIC will withdraw the recommended action(s) once the anomaly cell(s) start operating normally, e.g., the withdrawal of the recommended action can be based on at least one of the following conditions being met: i) the RIC successfully determines (e.g., using AI/ML) the cause of the anomaly and takes corrective action(s) to address the anomaly; ii) the RIC receives cell shutdown and/or restart trigger notification; and/or iii) automatic withdrawal of the recommended action after a specified period of time.

The techniques described herein are exemplary and should not be construed as implying any limitation on the present disclosure. Various alternatives, combinations and modifications could be devised by those skilled in the art. For example, operations associated with the processes described herein can be performed in any order, unless otherwise specified or dictated by the operations themselves. In addition, although the example embodiments have been described in the context of 5G NR, the present disclosure is equally applicable to other technologies (e.g., 4G or 6G). The present disclosure is intended to embrace all such alternatives, modifications and variances that fall within the scope of the appended claims.

The terms "comprises" or "comprising" are to be interpreted as specifying the presence of the stated features, integers, operations or components, but not precluding the presence of one or more other features, integers, operations or components or groups thereof. The terms "a" and "an" are indefinite articles, and as such, do not preclude embodiments having pluralities of articles.

## Claims

1. A method of optimizing Radio Access Network-based Notification Area (RNA) in the case a user equipment (UE) transitions to radio resource control inactive (RRC_INACTIVE) state, the method comprising:
detecting, by a radio intelligent controller (RIC) using artificial intelligence (AI) and/or machine learning (ML) technique, an anomaly cell based on at least one of the following factors: key performance indicators (KPIs), performance measurements (PMs), configuration parameters (CMs), fault management (FM) data, and trace data;
determining, by the RIC, based on the at least one of the factors, a cause for the detected anomaly cell; and
recommending, by the RIC to a gNodeB associated with the RNA having the anomaly cell, at least one of the following actions: a) exclude the anomaly cell from the RNA, and b) disable new radio resource control (RRC) connections from the UE.

2. The method according to claim 1, wherein the AI/ML technique is one of Support Vector Machine (SVM) or Isolation Forest technique.

3. The method according to claim 1, wherein at least one of:
the FM data relate to network alarms; and
the trace data relate to state and contextual information; and
the KPI is a function of at least one of the PMs, CMs, FMs and the trace data.

4. The method according to claim 1, wherein the disabling of new RRC connections includes disabling *RRCResumeRequest* procedure for the anomaly cell.

5. The method according to claim 2, wherein at least one of:
the FM data relate to network alarms; and
the trace data relate to state and contextual information; and
the KPI is a function of at least one of the PMs, CMs, FMs and the trace data.

6. The method according to claim 2, wherein the disabling of new RRC connections includes disabling *RRCResumeRequest* procedure for the anomaly cell.

7. The method according to claim 3, wherein the disabling of new RRC connections includes disabling *RRCResumeRequest* procedure for the anomaly cell.

8. The method according to claim 1, further comprising:
withdrawing, by the RIC, the at least one recommended action once the anomaly cell starts operating normally, wherein the withdrawal of the recommended action is based on at least one of the following conditions being met: i) the RIC successfully determines the cause of the anomaly at the anomaly cell and resolves the anomaly; ii) the RIC receives at least one of cell shutdown and cell restart trigger notification; and iii) a specified period of time for automatic withdrawal of the recommended action has elapsed.

9. The method according to claim 2, further comprising:
withdrawing, by the RIC, the at least one recommended action once the anomaly cell starts operating normally.

10. The method according to claim 9, wherein the withdrawal of the recommended action is based on at least one of the following conditions being met: i) the RIC successfully determines the cause of the anomaly at the anomaly cell and resolves the anomaly; ii) the RIC receives at least one of cell shutdown and cell restart trigger notification; and iii) a specified period of time for automatic withdrawal of the recommended action has elapsed.

11. The method according to claim 3, further comprising:
withdrawing, by the RIC, the at least one recommended action once the anomaly cell starts operating normally.

12. The method according to claim 11, wherein the withdrawal of the recommended action is based on at least one of the following conditions being met: i) the RIC successfully determines the cause of the anomaly at the anomaly cell and resolves the anomaly; ii) the RIC receives at least one of cell shutdown and cell restart trigger notification; and iii) a specified period of time for automatic withdrawal of the recommended action has elapsed.

13. The method according to claim 4, further comprising:
withdrawing, by the RIC, the at least one recommended action once the anomaly cell starts operating normally.

14. The method according to claim 13, wherein the withdrawal of the recommended action is based on at least one of the following conditions being met: i) the RIC successfully determines the cause of the anomaly at the anomaly cell and resolves the anomaly; ii) the RIC receives at least one of cell shutdown and cell restart trigger notification; and iii) a specified period of time for automatic withdrawal of the recommended action has elapsed.

15. The method according to claim 5, further comprising:
withdrawing, by the RIC, the at least one recommended action once the anomaly cell starts operating normally, wherein the withdrawal of the recommended action is based on at least one of the following conditions being met: i) the RIC successfully determines the cause of the anomaly at the anomaly cell and resolves the anomaly; ii) the RIC receives at least one of cell shutdown and cell restart trigger notification; and iii) a specified period of time for automatic withdrawal of the recommended action has elapsed.
